# EUROPEAN PATENT APPLICATION

(11) **EP 2 189 937 A1**
(43) Date of publication of application: **26.05.2010**
(21) Application number: 10157134.7
(22) Date of filing: 24.03.2009
(51) Int. Cl.: G06Q 30/00

(54) **Print order system**

(30) Priority: 26.03.2008 JP 2008081090; 26.03.2008 JP 2008081091
(62) Divisional of application: 09156001.1
(71) Applicant: NORITSU KOKI CO., LTD., Wakayama-shi, Wakayama (JP)
(72) Inventor: Tsuji, Yuki, Wakayama-shi Wakayama (JP); Matsushita, Masayuki, Wakayama-shi Wakayama (JP); Kinoshita, Togo, Wakayama-shi Wakayama (JP); Yukawa, Masaaki, Wakayama-shi Wakayama (JP)
(74) Representative: Skuhra, Udo

(57) **Abstract**

A print order system comprising: a print forming unit that forms prints according to an order of a customer; a print delivery unit for delivering the prints to the customer that includes a plurality of storage portions in which the prints outputted from the print forming unit can be stored; and a management unit that manages storage and print information representative of the status of each of the storage portions and the status of prints stored therein, wherein when the prints have been removed from a corresponding storage portion after a reserve period of the prints in the storage portion of the print delivery unit elapses, the management unit changes the content of the storage and print information so as to reflect the fact that the prints have been removed from the storage portion; the management unit transmits an electronic mail to a customer, who reserves the prints in the print delivery unit, before the reserve period elapses, in order to notify the reserved period and request the customer to send a reply mail within a predetermined time when the customer desires the extension of the reserve period, and the management unit thus rewrites the storage and print information with a newly extended reserve period when receiving the reply mail within a predetermined period, and the prints are removed from the storage portion in order to store the prints at the reception counter where the customer can receive the prints when not receiving the reply mail within the predetermined period.

## Description

### CROSS REFERENCE TO RELATED APPLICATION

This application claims priority from Japanese Patent Application Nos. 2008-081090 and 2008-081091, which are incorporated herein by reference.

### BACKGROUND OF THE INVENTION

### 1. Field of the Invention

The present invention relates to a print order system that can produce a print (such as a photographic print and a print formed by a dry printer) based on an order from a customer and transfer the print to the customer.

### 2. Description of the Related Art

Recently, with wide spread of digital cameras, widely adopted is a print order system that is capable of easily printing image data captured by a digital camera, and specifically a print order system that enables a customer to order printing through an order receiving terminal placed on a shop counter of a photo studio (a so-called processing laboratory shop) or through the Internet and pick up the produced print at the shop counter.

According to an example of a conventional print order system disclosed in, for example, PCT International Application Publication No. W02007/072133, an order receiving terminal is placed at a shop counter of a photo studio, etc., to receive print orders from customers, and prints are produced based on the order with a photograph processing apparatus or a print forming machine such as an inkjet printer, and the produced prints are stored in plural storage portions provided in a print delivery unit. A customer can pick up the prints by performing a predetermined pick-up operation to the print delivery unit.

### SUMMARY OF THE INVENTION

In the conventional print order system, because print delivery is made by the print delivery unit, advantageously a shop assistant is free from troublesome work such as print storage and delivery, and a customer can efficiently pick up prints at a convenient time of day.

The aforesaid conventional print order system is unlikely to cause a trouble when a customer picks up prints within a short period of time after the order. However, when a customer does not pick up prints over a relatively long period of time after the order, there might be cause a problem. Specifically, due to the limited number of storage racks or the like of the print delivery unit, prints stored for a long period of time may prevent a shop from accepting new orders, or cause another great trouble in efficient operation of the print order system including this type of print delivery unit.

In order to solve the aforesaid conventional problem, possibly the number of storage racks or the like is increased as many as possible or plural pieces of print delivery units are placed at the counter of a photo studio. However, this solution may cause another problem of necessitating additional installation space or installation costs. Therefore, the above approach does not necessarily solve the problem associated with such conventional system.

In view of the foregoing, the present invention has been conceived to solve the above problem. It is an object of the present invention to provide a print order system that is capable of appropriately controlling information regarding prints which are kept stored for a long period of time by a print delivery unit, thereby achieving more efficient management of the print order system, and at the same time improving usability for both customers and a photo studio.

According to the present invention, there is provided a print order system that includes the features of claim 1.

With the print order system having the aforesaid configuration, the prints outputted from the print forming unit are stored in a corresponding storage portion of the print delivery unit during the reserve period. Therefore, when the customer picks up the prints at the print delivery unit within the reserve period, the customer who made the pick-up request can pick up the ordered print from the print delivery unit.

For a customer who does not pick up the print even if the reserve period is expired soon, when an electronic mail address of the customer is registered, an electronic mail notifying that the reserve period of the print delivery unit is expired soon is transmitted to the customer. When a reply mail notifying that the customer desires the extension of the reserve period is received within the predetermined period by the management unit, the management unit changes the information to extend the reserve period.

On the other hand, when an electronic mail address of a customer is not registered or when a reply mail is not received from a customer, a system manager such as a shop assistant of a photo studio removes the prints from a corresponding storage portion of the print delivery unit after the reserve period elapses, and the information on the print is changed to reflect this fact in the management unit. In such cases, for example, the customer picks up the ordered prints at a reception counter of a photo studio.

With the print order system having such a configuration that when the prints are removed from a corresponding storage portion after the reserve period of the prints in the print delivery unit elapses, the management unit can change the information representative of the status of the prints, and the print delivery unit includes the notification means for enabling a customer to be notified based on the changed information in response to a print pick-up request of the customer after the reserve period elapses. Therefore, the operation of the print order system is not adversely affected even if the prints reserved over the long period of time are removed from the corresponding storage portion.

Accordingly, advantageously the print delivery unit is efficiently utilized when a system manager properly sets the reserve period, and the print order system can efficiently be operated by properly managing the information representative of the reserve period.

The customer cannot pick up the prints removed in the above-described manner from the print delivery unit. However, when the notification means properly provides the information to the customer, the customer can simply and securely pick up the print according to the information sent from the notification means, and thus advantageously the pick-up work does not become troublesome, and good service can be provided by a photo studio, etc.

When a customer is notified by the notification means, the customer picks up the prints, for example, at a counter of the photo studio. In this case, when the print order system is provided with another notification means for notification to a system manager or shop assistant when the notification to the customer has been made, the system manager or shop assistant can previously confirm that the customer has made the pick-up request of the prints removed from a corresponding storage portion. Accordingly, when the prints to be picked up by the customer are previously prepared based on the information sent by the other notification means, advantageously the delivery work is largely improved to smoothly deliver the prints to the customer.

With the print order system provided with the notification means designed to provide audible or visible notification, specific contents, such as the manner of the delivery and the time suitable for delivery can be included in the notifying information. Therefore, advantageously a series of print receiving and delivery operations between the customer and the system manager or shop assistant can be securely and rapidly performed.

With the print order system designed to transmit an electronic mail to a customer before the reserve period elapses, the customer can be motivated to pick up the prints within the reserve period. Therefore, advantageously the storage portions of the print delivery unit are properly organized with the result that the print order system can be efficiently operated.

With the configuration enabling the management unit to receive a reply mail to the electronic mail sent by the management unit from the customer, not only a demand that the customer picks up the print can be confirmed again, the good service can be provided by flexibly dealing with the demand.

A customer who has not sent back an electronic mail also receives an electronic mail from the management unit to directly pick up the prints, for example, at a reception counter without coming over the print delivery unit, in an actual pick up situation. Therefore, advantageously troublesome works can be eliminated.

When the management unit is designed to change the information representative of the status of the prints with the fact the prints have been removed from a corresponding storage portion of the print delivery unit after the reserve period elapses, advantageously the print delivery unit is effectively utilized when a system manager or shop assistant sets an appropriate reserve period, and the print order system can efficiently be operated by properly managing the information.

The entire configuration of the print order system of the present invention is extremely simple, so that advantageously the print order system can easily be constructed at low cost.

### BRIEF DESCRIPTION OF THE DRAWINGS

The above, and other objects, features and advantages of the present invention will become apparent from the detailed description thereof in conjunction with the accompanying drawings wherein.
FIG. 1 is a schematic diagram of a photo studio showing a print order system according to an embodiment of the present invention.
FIG. 2 is a schematic diagram showing prints outputted in a stacked state, according to an embodiment of the print order system of the present invention.
FIG. 3 is a front view showing a binding unit according to an embodiment of the print order system of the present invention.
FIG. 4 is a side view showing a print forming unit, a binding unit, and a print delivery unit according to an embodiment of the print order system of the present invention.
FIG. 5 is a flowchart showing the procedures of the operation from a print forming unit to a print delivery unit according to an embodiment of the print order system of the present invention.
FIG. 6 is a perspective view showing prints bound with a strip stamp according to an embodiment of the print order system of the present invention.
FIG. 7 is a flowchart showing the procedures for transmitting and receiving electronic mails before a reserve period elapses according to an embodiment of the print order system of the present invention.
FIG. 8 is a flowchart showing handling procedures after the reserve period elapses according to an embodiment of the print order system of the present invention.
FIG. 9 is a flowchart showing the procedures for receiving ordered prints according to an embodiment of the print order system of the present invention.

### DESCRIPTION OF THE PREFERRED EMBODIMENTS

A print order system according to an embodiment of the present invention will be described with reference to the drawings attached hereto.

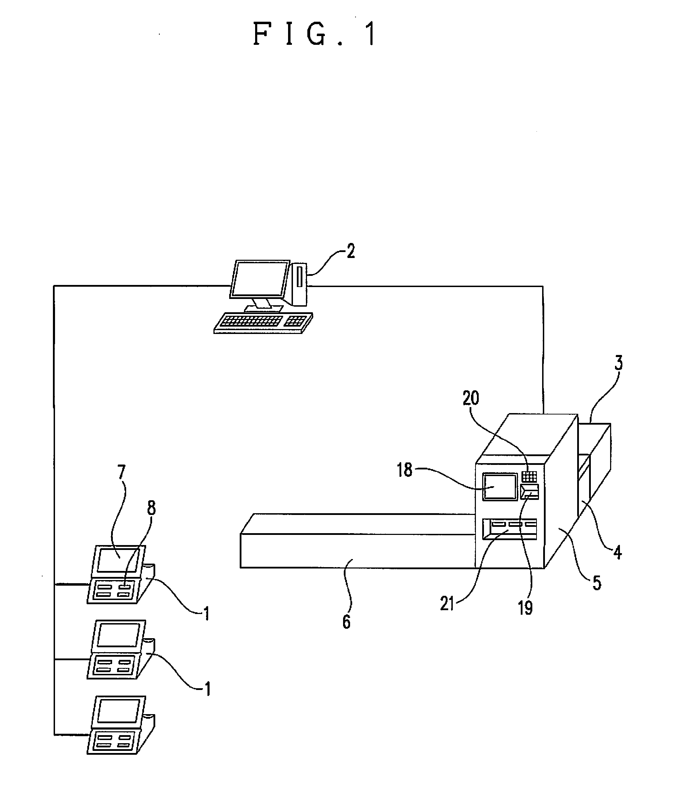

FIG. 1 shows a configuration of a photo studio including a print order system according to an embodiment of the present invention. The reference numeral 1 designates plural order receiving units that are placed at a counter of a photo studio in order to receive print orders from customers. The reference numeral 2 designates a personal computer (hereinafter simply referred as a PC) that is connected to each of the order receiving units 1 to constitute a management unit. The reference numeral 3 designates a print forming unit that produces a print according to an order of a customer. The reference numeral 4 designates a binding unit that binds the prints outputted from the print forming unit 3 with a strip stamp. The reference numeral 5 designates a print delivery unit that includes plural storage portions or storage racks in which prints of each order conveyed from the binding unit 4 can be respectively stored, and the print delivery unit 5 delivers the prints of each order to the customer. The numeral 6 designates a reception counter of the photo studio.

The order receiving units 1 each include a touch panel type liquid crystal display 7, a medium drive 8 into which various medium cards such as SmartMedia, CompactFlash (registered trademark), and Memory Stick taken out from the digital camera can be inserted, a printer (not shown) that issues an order receipt when the order is completed, and a control unit (not shown) that controls the operation of each of the order receiving units 1. Further, the order receiving unit 1 also has a function of completing a transaction with a credit card.

The PC 2 manages, for example, management data produced based on the content of an order each time at which the order is received. Examples of order management items mainly include a receipt number, a customer's name, a membership number, the number of prints, a print size, and information representative of the status of each storage rack of the print delivery unit 5. In addition to print orders from the order receiving unit 1, print orders by the Internet is managed as the management data of the PC 2 through a communication line. The print order system of this embodiment is designed so that the print order and the print delivery are performed regardless of whether the order is made through the order receiving unit 1 or through the Internet.

In this embodiment, an inkjet printer is employed as the print forming unit 3. Alternatively, the print forming unit 3 may be formed by another type of printer, such as a thermal transfer printer and a silver salt printer (photograph processing unit). The print forming unit 3 is connected to the PC 2 so that the ordered image data is printed on a specified print sheet and outputted based on the management data stored in the PC 2.

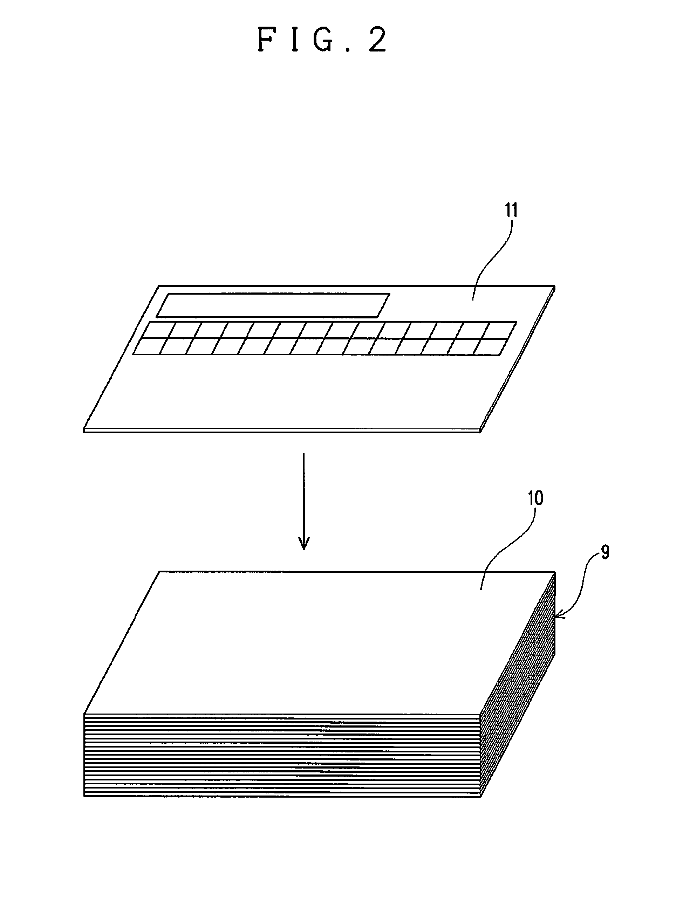

At this point, as shown in FIG. 2, in order to protect a print surface 10 of an uppermost print 9 of stacked prints, a so-called index print 11 on which ordered images of a reduced size are aligned and printed is added onto the uppermost print 9 when prints are outputted.

When an order of a large number of prints has been received, the print forming unit 3 outputs the prints while dividing the prints into plural groups based on an instruction provided from the control unit (not shown) in consideration of the permissible number of prints at each storage portion or rack of the print delivery unit 5. For example, assuming that the 100 prints are permitted to be stored in each storage portion or rack, the order of 102 prints exceeds the permissible number of prints. In this case, the 102 prints are not disproportionately divided into 100 prints and 2 prints, but the 102 prints are substantially equally divided into groups, for example, the 52 prints and the 50 prints, in order to ensure a predetermined weight and size. In this case, the uppermost print 9 of each group is protected by the index print 10.

The binding unit 4 is placed in front of the print forming unit 3. Because the binding unit 4 of this embodiment is widely used to bind various items of goods with a strip stamp, only the schematic configuration of the binding unit 4 will be described below.

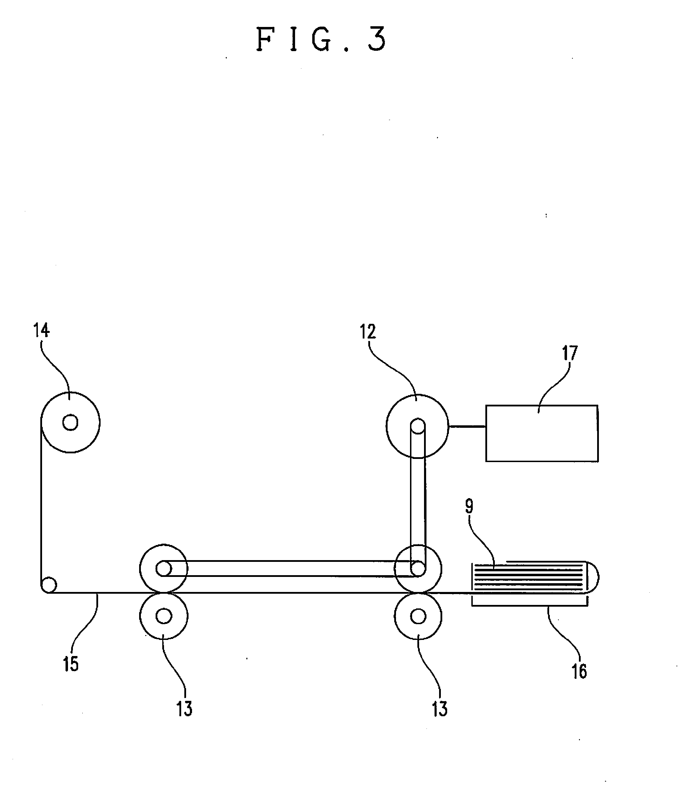

As shown in FIG. 3, in the binding unit 4, a strip stamp tape 15 is supplied from a winding reel 14 to a stacker unit 16 through a group of conveyer rollers 13 rotated by an electric motor 12. A control unit 17 controls the operation of the electric motor 12 such that a supply amount of the strip stamp tape 15 can appropriately automatically be changed according to the number of prints 9 to be bound. The binding unit 4 includes a cutter (not shown) that cuts the strip stamp tape 15 into a predetermined length and a bonding unit (not shown) that bonds the strip stamp tape 15. The prints 9 outputted from the print forming unit 3 are supplied in a stacked state to the stacker unit 16.

The print delivery unit 5 is placed in front of the binding unit 4. Because the print delivery unit 5 has the basic configuration similar to that of the conventional print delivery unit, the print delivery unit 5 will schematically be described below.

On the front side of the print delivery unit 5 are provided a liquid crystal display screen 18, a barcode reader 19 that can read a barcode of an order receipt, a numeric keypad 20 into which a password can be inputted, and a pick-up port 21 of the prints 9.

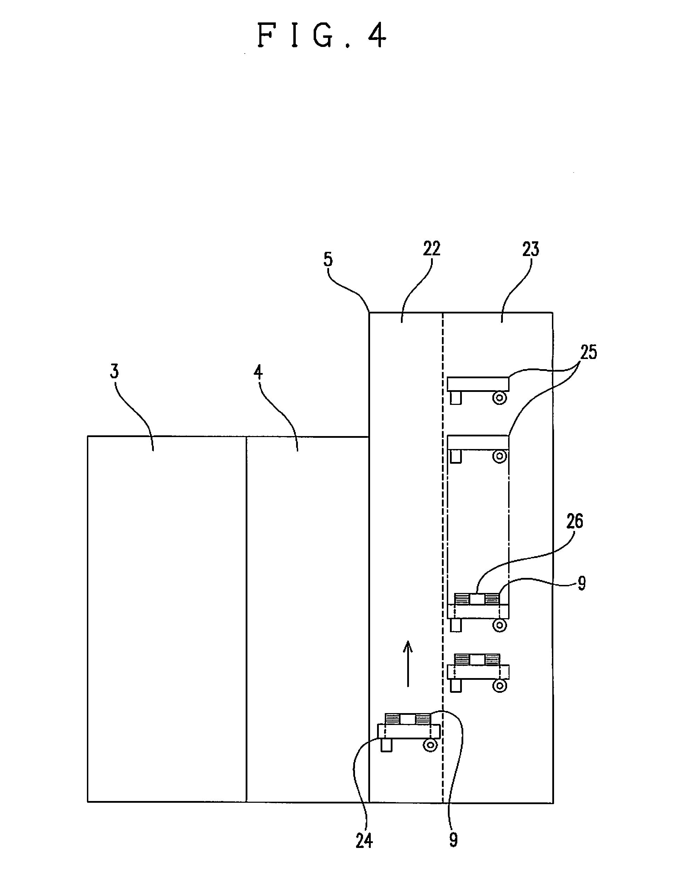

As shown in FIG. 4, provided inside of the print delivery unit 5 are a conveyer unit 22 located on the rear side and a stock unit 23 located on the front side. A lifting table 24 is provided in the conveyer unit 22 so as to be moved vertically and horizontally, while holding thereon prints 9 supplied from the binding unit 4. Plural storage portions or racks 25 in which the prints 9 can be stored are provided in the stock unit 23. The lifting table 24 is operated to be stopped at a rear upper side of a desired storage portion or rack 25 with no prints stored, and to be pivotally operated thereby allowing the rear side of the storage portion or rack 25 to be moved upwards to move the prints 9 to the corresponding storage portion or rack 25 for storage. A shop assistant or a system manager can take out the prints 9 from the storage portion or rack 25 if needed.

In cases where a customer picks up the ordered prints 9, he or she sets the order receipt on the barcode reader 19, thereby enabling the barcode of the order receipt to be read by the barcode reader 19. In cases where the customer places the order through the Internet, when the customer inputs a password through the numeric keypad 20, the storage portion or rack 25 is subsequently rotated such that the prints 9 drop in the pick-up port 21 through a shoot (not shown). Thus, the customer can pick up the prints 9.

In the embodiment, a period (reserve period) during which the prints 9 are stored in the corresponding storage portion or rack 25 is set at 10 days since the order receiving data. The prints 9 that are reserved over a longer period than the reserve period are displayed on a monitor of the PC 2, the shop assistant of the photo studio removes the prints 9 from the corresponding storage portion or rack 25 of the print delivery unit 5 to store the prints 9 at the reception counter 6 based on the displayed information, and the shop assistant changes the management data to reflect this removal therein. As an alternative to such manual data changing operation, the management data may automatically be changed.

Then, an advance notification regarding the expiration of the reserve period is made two days before the expiration of the reserve period (after eight days elapse since the order receiving date), by the monitor of the PC 2. Based on the displayed information that only the two days remain before the expiration of the reserve period, the PC 2 transmits a message by electronic mail, saying such as "The reserve period of the prints is expired day after tomorrow and therefore please pick up the prints." , and further "If you wish to extend the reserve period because you cannot pick up the print within the reserve period, please send back an empty mail until the day after tomorrow.", to the customer whose electronic mail address is registered or known by the photo studio.

When a reply mail is received from the customer within the predetermined period, the shop assistant changes the management data with the PC 2 to reflect the fact that the reserve period of the corresponding prints 9 is further extended for ten days. On the other hand, when a reply mail is not received, the corresponding prints 9 are removed from the storage portion or rack 25 after the reserve period elapses.

In cases where the prints 9 are removed from the storage portion or rack 25, when the customer who ordered the prints 9 sets an order receipt, thereby enabling the print delivery unit 5 to read the barcode of the order receipt in order to pick up the prints 9 later, or when the customer inputs a predetermined password, the PC 2 transmits a signal to the print delivery unit 5 to display a message, saying "Please pick up the prints not at the print delivery unit but at the reception counter", on the liquid crystal screen 18 of the print delivery unit 5, and at the same time the customer is notified of the same contents through an audible notification.

Further, the shop assistant is also notified of a message, saying "The customer made the pick-up request of the prints which have been removed", by both the liquid crystal screen of the PC 2 and an audible notification.

The present embodiment is made as described above, and an example of the operation of the print order system of the embodiment will be described below.

The customer inserts a medium card into the medium drive 3 of the order receiving unit 1. Then, the customer operates the order receiving unit 1 through the touch panel on the display 2 to select images to be ordered, and the customer determines the number of prints, a print size, and the like for each image. When the necessary items of information are inputted to complete the transaction, the printer issues an order receipt with a predetermined barcode printed thereon, and thus the customer receives the order receipt.

When the customer has a membership of the photo studio, or when the customer places the order through the Internet, his or her electronic mail address is sometimes inputted in a registration form of the membership or an Internet ordering form for ordering the prints. This electronic mail address may be registered through the touch panel of the order receiving unit 1 when the customer visits the photo studio to order prints.

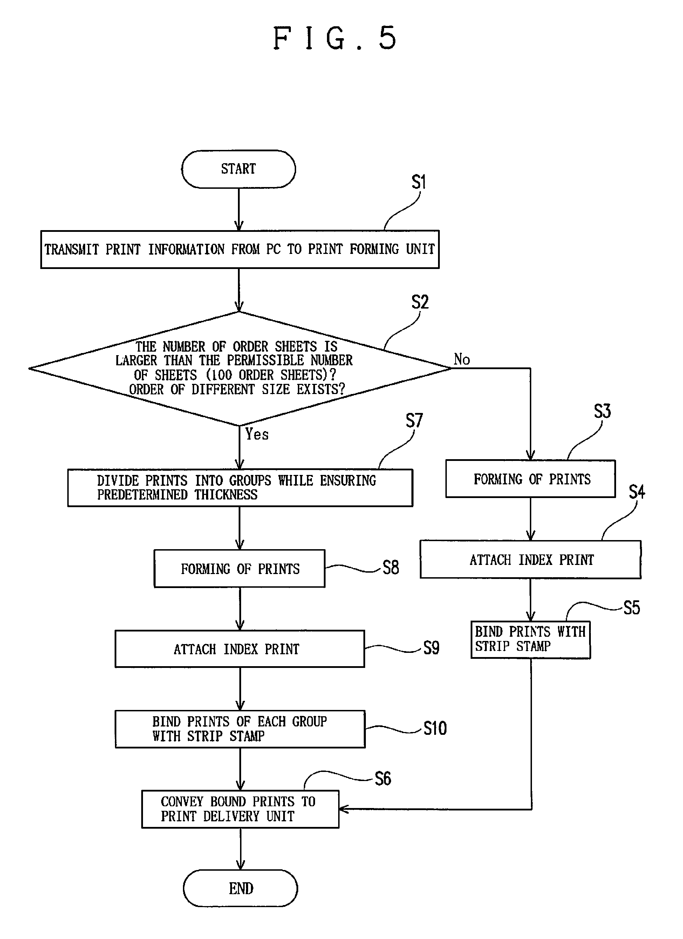

When the print order is received, the PC 2 produces the management data representative of the contents of the order, and the prints 9 are produced and stored, as shown in the flowchart of FIG. 5.

First, the PC 2 transmits print information on the number of order sheets and the order size of the prints 9 to the control unit of the print forming unit 3 (S1). The control unit determines whether the number of order sheets exceeds a permissible number of sheets of each storage portion 25, that is, 100 sheets and whether the order is placed with different sizes (S2). When the number of order sheets does not exceed the permissible number of sheets while the order is placed in the same size, the print forming unit 3 produces the prints 9 of the number of order sheets (S3), and the prints 9 are outputted in the stacked state while the index print 11 is added onto the uppermost print 9 (S4). The index print 11 can protect the print surface 10 of the uppermost print 9 to prevent damages such as a scratch.

As an alternative to the index print 11, a sheet piece made of a synthetic resin may be attached to the uppermost print 9. For example, an unprinted print sheet, a sheet with various advertisements printed thereon, and an excessive print of the number of order prints may be used as the sheet piece to be mounted on the uppermost print 9. In a case where only a small number of prints are ordered, a thick paper sheet may be attached to ensure strength. Depending on the type of sheet piece, not the print forming unit 3 but the binding unit 4 may include a sheet-piece attaching mechanism.

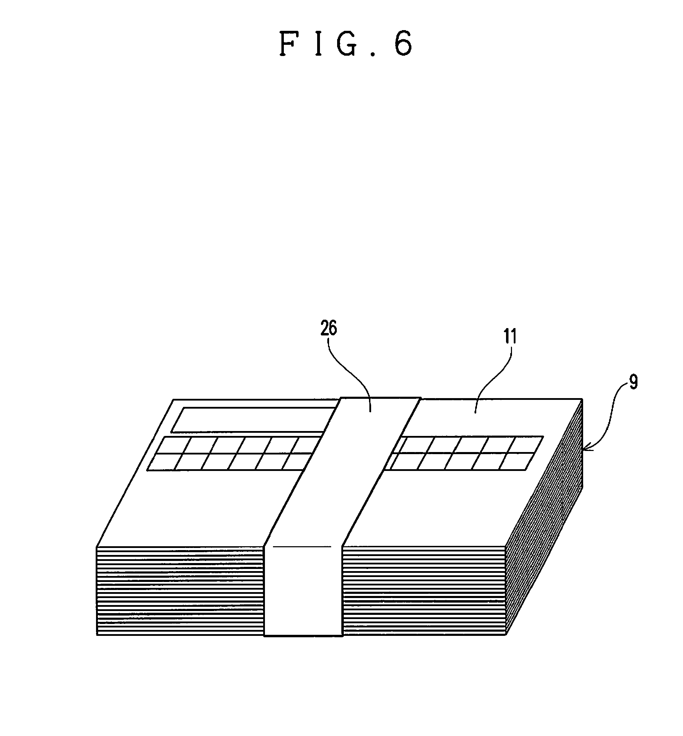

Then, the binding unit 4 binds the prints 9 with a strip stamp 26 as shown in FIG. 6 (S5), and the prints 9 are conveyed to the print delivery unit 5 (S6).

From the standpoint of cost performance, the packing manner in which the binding unit 4 binds the prints 9 with the strip stamp 26 is significantly superior to a packing manner with an envelope, advantageously the operation cost can largely be reduced. That is, the packing mode with the strip stamp may be most suitable to the characters of this kind of print order system.

A stack of the prints 9 is maintained in good state by the strip stamp, so that the subsequent conveyance of the prints 9 to the print delivery unit 5 and the subsequent delivery of the prints 9 to the customer can smoothly and securely be performed.

The binding unit 4 has a configuration much simpler than that of an unit for enclosing the prints in the envelope. Therefore, advantageously the binding unit 4 can be produced at low cost, and can easily be incorporated into the print order system.

The shop assistant is free from packing of the prints by adopting the binding unit 4, so that a series of procedures from the print forming unit 3 to the print delivery unit 5 can be automated to largely reduce the burden of the shop assistant.

On the other hand, when the control unit determines that the number of order sheets exceeds the permissible number of sheets or when the control unit determines that the order is placed with different sizes, the prints are divided into plural groups or into same-size groups. At this point, the prints are divided after the control unit performs the adjustment such that the weights and thicknesses of the groups become predetermined values or more (S7). Thus, the subsequent binding with the binding unit 4, the subsequent storage of the prints in the corresponding storage portion or rack 25 of the print delivery unit 5, and the subsequent delivery of the prints to the customer can smoothly and securely be performed when the predetermined weight and thickness are appropriately adjusted. The binding state of the prints is stabilized by ensuring a certain thickness, and therefore it is possible to provide services, enabling the prints to be picked up through, for example, drop ejection, at the print delivery unit 5 in a stabilized manner and enabling a customer to carry the prints without fear of breaking of the bind.

The print forming unit 3 produces the prints 9 in each group (S8), the index print 11 is attached onto the uppermost print of each group (S9), the binding unit 4 binds the prints group by group with the strip stamp 26 (S10), and the prints are conveyed to the print delivery unit 5 and stored group by group at the respective storage portions or racks 25 (S6).

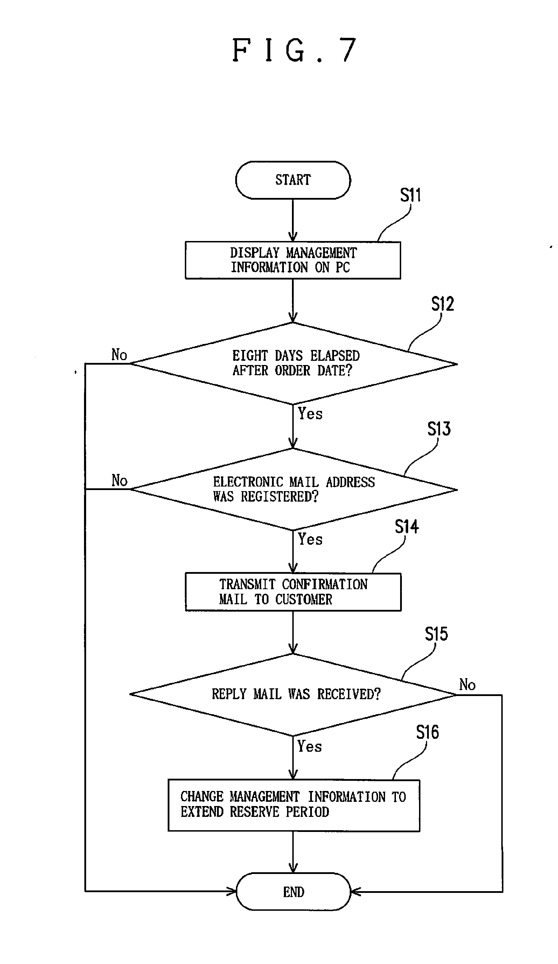

The prints 9 stored in the print delivery unit 5 are managed as follows. Specifically, as shown in FIG. 7, when in the start-up of the system, for example, in the morning, a shop assistant checks the management information (storage and print information) displayed on the monitor of the PC 2 (S11). At this point, the shop assistant determines whether the order in which eight days elapse since the order date exists (S12), and then determines whether the order of a customer whose electronic mail address is registered (S13). For the management information which meets these conditions, the fact that the order in which eight days elapse since the order date exists and the fact that the order of the customer whose electronic mail address is registered are displayed, and the PC 2 transmits the confirmation mail having the above-described contents to the customer whose electronic mail address is registered (S14).

A confirmation whether a reply mail with a request for extending the reserve period is received from the customer in response to the confirmation mail is made (S15), and the shop assistant changes the management information so as to extend the reserve period of the order by ten days when the reply mail is received within the predetermined period (S16).

The transmission of the confirmation mail before the expiration of the reserve period can motivate customers to pick up their ordered prints 9 within the reserve period, which enables the storage portion 25 to be well organized and thus the system to be efficiently operated. Not only the customer's demand for the pick-up of the print can be re-confirmed, but the good-quality service can be provided by flexibly dealing with the demand. The customer who does not send back the mail can also receive the confirmation mail to directly pick up the prints 9 at the reception counter 6 without coming over the print delivery unit 5. Therefore, advantageously such unnecessary action can be eliminated.

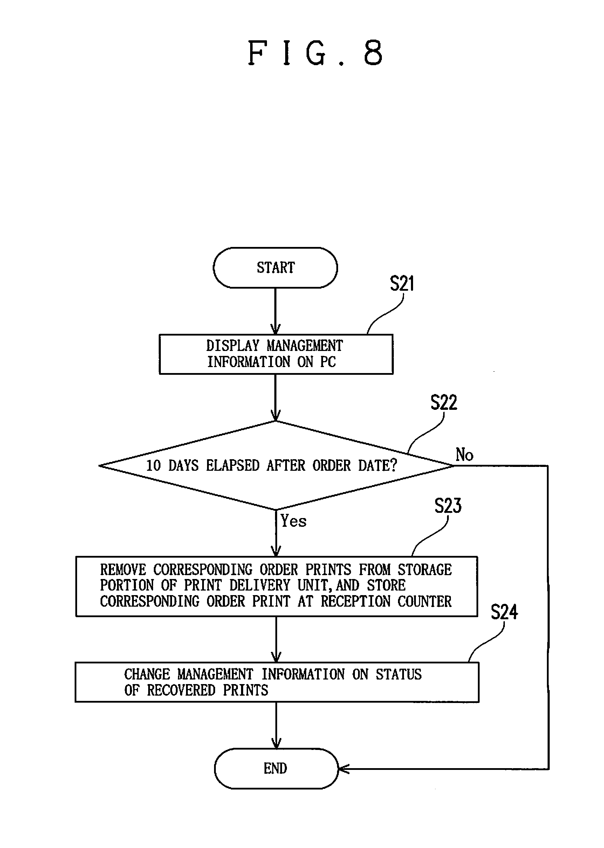

On the other hand, as shown in FIG. 8, in checking the management information during the start-up of the system, for example, in the morning (S21), when the order of the prints whose reserve period of ten days elapses since the order data exists, the management information on the order is displayed on the monitor of the PC 2 (S22). Based on the management information on the order displayed on the monitor, the shop assistant removes the corresponding prints 9 from the storage portion or rack 25 of the print delivery unit 5 and stores the prints 9 at the reception counter 6 (S23). The shop assistant changes the management information on the recovered print 9 using the PC 2 (S24) to reflect this removal.

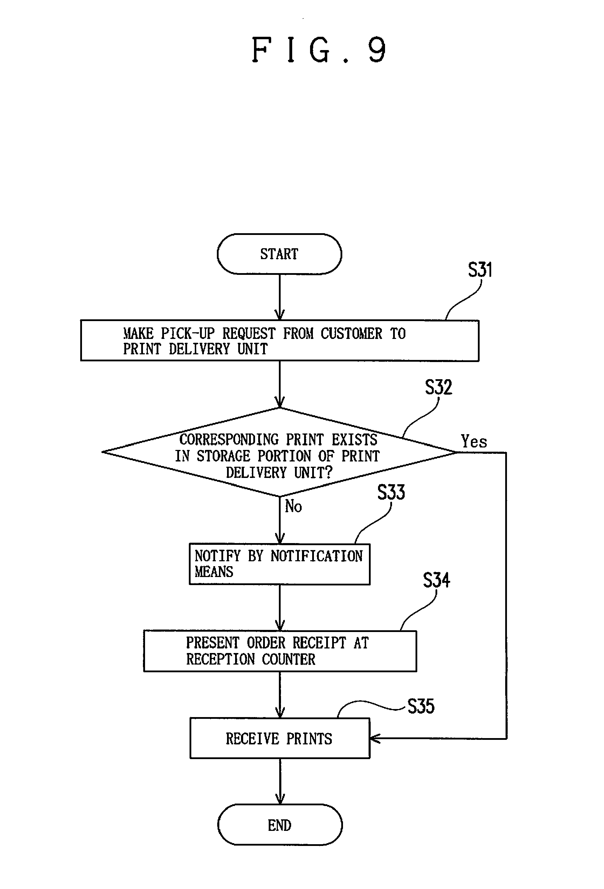

The customer can pick up the ordered prints 9 in the manner described as follows. As shown in FIG. 9, when the customer makes the pick-up request by causing the barcode reader 19 of the print delivery unit 5 to read the order receipt (S31), a confirmation whether the corresponding prints 9 are stored in the storage portion or rack 25 is made in response to the pick-up request (S32). When the prints 9 are stored in the storage portion or rack 25, the storage portion or rack 25 is rotated, thereby dropping the prints so that the customer can pick up the ordered prints 9 from the pick-up port 21 of the print delivery unit 5.

At this point, in a case where a large number of prints are ordered, or prints of different sizes are ordered, the prints 9 are divided into plural groups and are respectively stored in plural storage portions or racks 25 group by group. Each of the plural storage portions or racks 25 is rotated in response to the pick-up request of the customer, thereby allowing each corresponding group of prints to drop therefrom so that the customer can pick up all the ordered prints 9.

On the other hand, when the customer makes the pick-up request for the removed prints 9, the management unit 2 transmits a signal to the print delivery unit 5 based on the changed management information on the prints 9, and the notification means also notifies the shop assistant that the prints 9 can directly be picked up at the reception counter 6 through an audible notification and a monitor display through the PC 2 (S33). In response to this notification, the customer presents the order receipt at the reception counter 6 (S34), and the customer picks up the ordered prints 9 (S35).

When the notification means properly provides the notification, the customer can easily and securely pick up the prints by following the instructions. Therefore, the pick-up work does not become troublesome, and high-quality services can be provided.

The notification is also provided to the shop assistant, so that the shop assistant can recognize at an early stage that the customer has made the pick-up request for the prints 9 removed from the storage portion 25. Accordingly, when the prints 9 to be picked up by the customer are previously prepared based on the notification, the works for handing-over the prints can be largely improved and the prints 9 can be smoothly transferred to the customer.

The entire configuration of the print order system of the present invention is extremely simple, so that the print order system can easily be constructed at low cost.

In the embodiment, not only the print delivery unit 5 but also the PC 2 includes the notification means. However, it is not always necessary that the PC 2 include the notification means. Each of the notification means is not limited to the notification means in which the information is recognized in the audible or visible manner like this embodiment.

When the prints 9 are removed from the storage portion 25 of the print delivery unit 5, the system manager such as the shop assistant manually changes the management information. Instead, the management information may automatically be changed.

In the above embodiment, on the presumption that an electronic mail address of a customer is registered, a procedure involving transmitting the electronic mail for confirmation is adopted. This confirmation mail may be transmitted if needed, and it is not always necessary to transmit the confirmation mail, in the present invention.

The specific configurations of the order receiving unit 1, the management unit 2, the print forming unit 3, and the print delivery unit 5 are not limited to those of the embodiment, but any change can appropriately be made without departing from the intended scope of the present invention.

The packing form in which the binding unit 4 binds the prints 9 with the strip stamp 26 is adopted in the embodiment. Alternatively, the prints 9 may be packed in a different packing form, or unpacked or unbound prints 9 may be stored in a stacked state in the storage portion or rack 25 of the print delivery unit 5. With this arrangement, the binding unit 4 may be omitted.

In the embodiment, the index print 11 is attached onto the uppermost print 9 of the stack of the prints 9. The index print 11 may be attached according to needs and circumstances, and therefore the index print 11 may be omitted.

In the above embodiment, the PC 2 that acts as the management unit manages the management information on the customers and various pieces of unit. However, the present invention is not limited to the above embodiment. For example, each of the print forming unit 3, the binding unit 4, and the print delivery unit 5 may have various management functions.

In the embodiment, in order to deal with the case where a larger number of prints than the permissible number of prints storable in each storage portion or rack 25 of the print delivery unit 5 is ordered, or the case where the order is placed with the different print sizes, the print forming unit 3 is configured such that the prints 9 are produced while divided into plural groups. However, it is not always necessary to limit the print forming unit 3 to this embodiment. For example, the number of prints to be ordered at one time may be restricted or the order may be restricted to the same size.

In the print delivery unit 5, the setting of the reserve period of the prints 9 is not limited to the above embodiment. The setting of the reserve period may appropriately be changed according to the operation status of the print order system.

The application range of the print order system of the present invention is not limited to the photo studio of the embodiment, but obviously the print order system of the present invention can widely be applied to commercial facilities such as a supermarket and a department store.

This specification is by no means intended to restrict the present invention to the preferred embodiments set forth therein. Various modifications to the print order system, as described herein, may be made by those skilled in the art without departing from the spirit and scope of the present invention as defined in the appended claims.

## Claims

1. A print order system comprising: a print forming unit that forms prints according to an order of a customer; a print delivery unit for delivering the prints to the customer that includes a plurality of storage portions in which the prints outputted from the print forming unit can be stored; and a management unit that manages storage and print information representative of the status of each of the storage portions and the status of prints stored therein, wherein
when the prints have been removed from a corresponding storage portion after a reserve period of the prints in the storage portion of the print delivery unit elapses, the management unit changes the content of the storage and print information so as to reflect the fact that the prints have been removed from the storage portion; the management unit transmits an electronic mail to a customer, who reserves the prints in the print delivery unit, before the reserve period elapses, in order to notify the reserved period and request the customer to send a reply mail within a predetermined time when the customer desires the extension of the reserve period, and the management unit thus rewrites the storage and print information with a newly extended reserve period when receiving the reply mail within a predetermined period, and the prints are removed from the storage portion in order to store the prints at the reception counter where the customer can receive the prints when not receiving the reply mail within the predetermined period.
